# EUROPÄISCHE PATENTSCHRIFT

(11) **EP 1 242 210 B1**
(45) Veröffentlichungstag und Bekanntmachung des Hinweises auf die Patenterteilung: **02.03.2005**
(21) Anmeldenummer: 00990694.2
(22) Anmeldetag: 09.12.2000
(51) Int. Cl.: B23K 26/00

(54) **VERFAREN UND VORRICHTUNG ZUM DURCHTRENNEN VON FLACHEN WERKSTÜCKEN AUS SPRÖDBRÜCHIGEM MATERIAL**
METHOD AND DEVICE FOR THE SEPARATION OF FLAT WORKPIECES MADE FROM A BRITTLE MATERIAL
PROCEDE ET DISPOSITIF DE SEPARATION DE PIECES PLANES REALISEES DANS UN MATERIAU A RUPTURE FRAGILE

(30) Priorität: 31.12.1999 DE 19963939
(43) Veröffentlichungstag der Anmeldung: 25.09.2002
(73) Patentinhaber: Schott AG, 55122 Mainz (DE)
(72) Erfinder: HAUER, Dirk, 26954 Nordenham-Ellwürden (DE); HOETZEL, Berndt, 55286 Wörrstadt (DE)
(74) Vertreter: Fuchs Mehler Weiss & Fritzsche
(86) Internationale Anmeldenummer: PCT/EP2000/012460
(87) Internationale Veröffentlichungsnummer: WO 2001/049444

(56) Entgegenhaltungen:
- EP-A- 0 872 303
- WO-A-93/20015
- WO-A-96/20062
- US-A- 4 725 709

## Beschreibung

Die Erfindung bezieht sich auf ein Verfahren zum Durchtrennen von flachen Werkstücken aus sprödbrüchigem Material, insbesondere Glas oder Keramik, bei dem ein Laserstrahl mit einem linienförmigen Strahlprofil mit nachlaufendem Kühlfleck entlang einer Trennlinie mit vorgegebener Kontur bewegt wird und auf eine Vorrichtung zum Durchführen des Verfahrens. Eine bevorzugte Anwendung ist dabei das Schneiden von Flachglas.

Die Erfindung bezieht sich ferner auf eine Vorrichtung zum Durchtrennen eines derartigen Werkstückes mittels eines Laserstrahles in Form eines linienförmigen Strahlprofils mit nachlaufendem Kühlspot.

Konventionelle Trennverfahren für Flachglas basieren darauf, mittels eines Diamanten oder eines Schneidrädchens zunächst eine Ritzspur im Glas zu generieren, um das Glas anschließend durch eine äußere mechanische Kraft entlang der so erzeugten Schwachstelle zu brechen (Ritz-Brech-Methode). Nachteilig ist bei diesem Verfahren, daß durch die Ritzspur Partikel (Splitter) aus der Oberfläche gelöst werden, die sich auf dem Glas ablagern können und dort beispielsweise zu Kratzern führen können. Ebenfalls können sogenannte Ausmuschelungen an der Schnittkante entstehen, die zu einem unebenen Glasrand führen. Weiterhin führen die beim Ritzen entstehenden Mikrorisse in der Schnittkante zu einer verringerten mechanischen Beanspruchbarkeit, d. h. zu einer erhöhten Bruchgefahr.

Ein Ansatz, sowohl Splitter als auch Ausmuschelungen und Mikrorisse zu vermeiden, besteht im Trennen von Glas auf der Basis thermisch generierter mechanischer Spannung. Hierbei wird eine Wärmequelle, die auf das Glas gerichtet ist, mit fester Geschwindigkeit relativ zu dem Glas bewegt und so eine derart hohe thermomechanische Spannung erzeugt, daß das Glas Risse bildet. Der notwendigen Eigenschaft der Wärmequelle, die thermische Energie lokal, d. h. mit einer Genauigkeit besser einen Millimeter, was den typischen Schnittgenauigkeiten entspricht, positionieren zu können, genügen Infrarotstrahler, spezielle Gasbrenner und insbesondere Laser. Laser haben sich wegen ihrer guten Fokussierbarkeit, guten Steuerbarkeit der Leistung sowie der Möglichkeit der Strahlformung und damit der Intensitätsverteilung auf Glas bewährt und durchgesetzt. Dabei ist es sowohl möglich, das Glas durch den Laserstrahl zunächst zu ritzen, um es anschließend mechanisch zu brechen, als auch das Glas direkt mit dem Strahl in Verbindung mit einem mechanisch aufgebrachten Startriß zu durchtrennen, d.h. zu schneiden. Sowohl das "Ritzen-Brechen" als auch das "Schneiden" soll von dem Begriff "Trennen" bzw. "Durchtrennen" umfaßt werden.

Dieses Laserstrahl-Trennverfahren, das durch eine lokale Erwärmung durch den fokussierten Laserstrahl in Verbindung mit einer Kühlung von außen eine thermomechanische Spannung bis über die Bruchfestigkeit des Werkstoffes induziert, ist durch mehrere Schriften bekannt geworden, beispielsweise durch die EP 0 872 303 A 2.

Die vorgenannten Laserstrahl-Trennverfahren unterscheiden sich insbesondere durch die Konfiguration des Brennfleckes. So nutzt das Verfahren nach der DE 693 04 194 T 2 einen Laserstrahl mit elliptischem Querschnitt mit nachlaufendem Kühlspot.

Die bereits zitierte EP 0 872 303 A 2 beschreibt ein Laserstrahl-Trennverfahren, das einen Brennfleck mit einer U- bzw. V-förmigen Kontur vorsieht, die sich in der Trennrichtung öffnet. Auch davon abgewandelte Konturen, wie X-förmige Brennflecke, werden beschrieben. In beiden Fällen haben die Laserstrahl-Brennflecke eine zweidimensionale Struktur, die sich bei der Ausführung von geraden Schnitten gut bewährt hat. Bei der Ausführung von Freiformschnitten müßten eine der Kontur der Trennlinie angepaßte, gekrümmte zweidimensionale Brennflecke erzeugt und der Kontur samt der nachfolgenden Kühlung nachgefahren werden. Dies würde insbesondere eine Kopplung der den jeweiligen zweidimensionalen Brennfleck erzeugenden Scannereinrichtung und der Kühlspoteinrichtung mit einer Bahnsteuerung erfordern, deren Realisierung infolge der großen auszutauschenden Datenmengen einerseits und der geforderten Schnittgeschwindigkeiten andererseits sehr problematisch ist.

Durch die DE 43 05 107 C 2 ist ein Laserstrahl-Trennverfahren bekannt geworden, bei dem der Laserstrahl statisch, d.h. mit feststehenden optischen Komponenten, so geformt ist, daß sein Strahlquerschnitt auf der Oberfläche des Werkstückes eine linienförmige Form aufweist, bei dem das Verhältnis von Länge und Breite des auftreffenden Strahlquerschnittes mittels einer Blende im Laserstrahlengang einstellbar ist. Auch dieses Verfahren ist in seiner Einsatzfähigkeit stark eingeschränkt. Wegen der statischen Erzeugung des linienförmigen Brennfleckes können keine Freiformschnitte durchgeführt werden, und, da die Kühlung erst nach dem vollständigen Erwärmen der Trennlinie, z.B. durch Anblasen mittels kalter Druckluft, aufgebracht werden soll, eignet sich das bekannte Verfahren praktisch nur für das beschriebene Abschneiden des Preßrandes von Hohlgläsern, bei dem sich das Hohlglas im ortsfesten Laserstrahl dreht, wobei zunächst umfänglich der Rand durch den Laserstrahl erwärmt und anschließend durch Aufblasen des Gases unterstützend gekühlt wird.

Durch die WO 96/200 62 A ist ein Verfahren bzw. eine Vorrichtung gemäß dem Oberbegriff des Anspruchs 1 bzw. des Anspruchs 4 bekannt geworden.

Der Erfindung liegt die Aufgabe zugrunde, das eingangs bezeichnete, bekannte Verfahren so zu führen bzw. die zugehörige Vorrichtung so auszubilden, daß auf relativ einfache Weise Freiformschnitte mit dem Laserstrahl-Trennverfahren durchführbar sind.

Ausgehend von dem Verfahren zum Durchtrennen von flachen Werkstücken aus sprödbrüchigem Material, bei dem ein Laserstrahl mit einem linienförmigen Strahlprofil mit nachlaufendem Kühlfleck entlang einer Trennlinie mit vorgegebener Kontur bewegt wird, gelingt die Lösung der Aufgabe verfahrensmäßig dadurch, daß auf dem Werkstück ein linienförmiger Brennfleck durch Scannen des Laserstrahles erzeugt wird, und während jeder Scanbewegung Bahndaten der Trennlinie bereitgestellt werden, derart, daß der linienförmige Brennfleck eine Krümmung entsprechend der Krümmung der Kontur der Trennlinie erfährt, und seine Länge ebenfalls abhängig von der Krümmung der Kontur der Trennlinie durch Einstellen der Scanamplitude eingestellt wird.

Durch diese Maßnahmen ist es möglich, Freiformschnitte mit beliebiger Kontur zu erzeugen, da der linienförmige Brennfleck im Gegensatz zu zweidimensionalen Brennflecken mit beherrschbaren Datenmengen in seiner Krümmung einstellbar ist, und zwar entsprechend der Kontur der Trennlinie, so daß der Brennfleck auf dieser Trennlinie gehalten wird, unter Anpassung der Länge des linienförmigen Brennfleckes an die Krümmung der Kontur, damit bei kleinen Krümmungsradien die Brennflecklänge entsprechend kurz und bei großen Radien entsprechend lang ist, um den notwendigen Energieeintrag auf der Trennlinie zu gewährleisten.

Um ein Erweichen des Materials des Werkstückes zu vermeiden, wird das Verfahren nach einer Ausgestaltung der Erfindung so geführt, daß die Laserleistung abhängig von der Länge des linienförmigen Brennfleckes eingestellt wird.

Das Aufbauen einer optimalen thermomechanischen Spannung im Werkstück läßt sich erzielen, wenn der Kühlfleck so dem linienförmigen Brennfleck nachgeführt wird, daß sein Abstand zum Anfangspunkt des Brennfleckes konstant ist.

Hinsichtlich der Vorrichtung zur Durchführung des erfindungsgemäßen Verfahrens gelingt die Lösung der Aufgabe dadurch, daß eine optische Anordnung mit einem Scanner zur Erzeugung eines linienförmigen Brennfleckes vorgesehen ist, die über eine die Kontur des Brennfleckes durch Achsen U und V vorgebende Profilsteuerung und Lageachsen X, Y, C des Brennfleckes in Bezug auf das Werkstück vorgebende Stellglieder derart mit einer numerischen Bahnsteuerung gekoppelt sind, daß während jeder Scanbewegung Bahndaten der Trennlinie der Profilsteuerung und den Stellgliedern zuführbar sind, derart, daß der linienförmige Brennfleck eine Krümmung entsprechend der Krümmung der Kontur der Trennlinie erfährt sowie auf dieser verfahrbar ist und seine Länge ebenfalls abhängig von der Kontur der Trennlinie einstellbar ist.

Ein optimales Trennen ist gewährleistet, wenn gemäß einer Ausgestaltung der Erfindung weitere mit der Bahnsteuerung gekoppelte Achsen zum Positionieren des Kühlfleckes in Bezug auf den linienförmigen Brennfleck und das Werkstück vorgesehen sind.

Die Vorrichtung kann gemäß einer weiteren Ausgestaltung der Erfindung besonders zweckmäßig aufgebaut werden, wenn die optische Anordnung einen Scanner mit zwei senkrecht zueinander oszillierenden Schwingspiegeln aufweist. Zur Veränderung der Länge und der Krümmung des linienförmigen Brennfleckes braucht dann lediglich die Schwingung der beiden Schwingspiegel verändert zu werden, so daß auch die Profilsteuerung und die Bahnsteuerung relativ einfach gestaltet werden können. Es wird dabei nicht nur die Schwingweite geändert, sondern auch die Schwingungsform und die Lage der Schwingungen zueinander. So sind beispielsweise bei Bogen-Geraden-Übergängen die Schwingungen nicht harmonisch.

Weitere Merkmale und Vorteile der Erfindung ergeben sich anhand der Beschreibung eines in der Zeichnung dargestellten Ausführungsbeispieles.

Es zeigen:
- Fig. 1: in einer schematischen Blockschaltbild-Darstellung den prinzipiellen Aufbau der Kontur-Steuerung der erfindungsgemäßen Vorrichtung,
- Fig. 2: in einer schematischen, diagrammartigen Darstellung die Form des Brennfleckes und des Kühlfleckes sowie die zugehörigen Bewegungsachsen, die von der Kontursteuerung zu verarbeiten sind, und
- Fig. 3: in einer schematischen Darstellung die von der Krümmung der Kontur der Trennlinie abhängige unterschiedliche Länge des linienförmigen Brennfleckes bei einem speziellen Freiformschnitt.

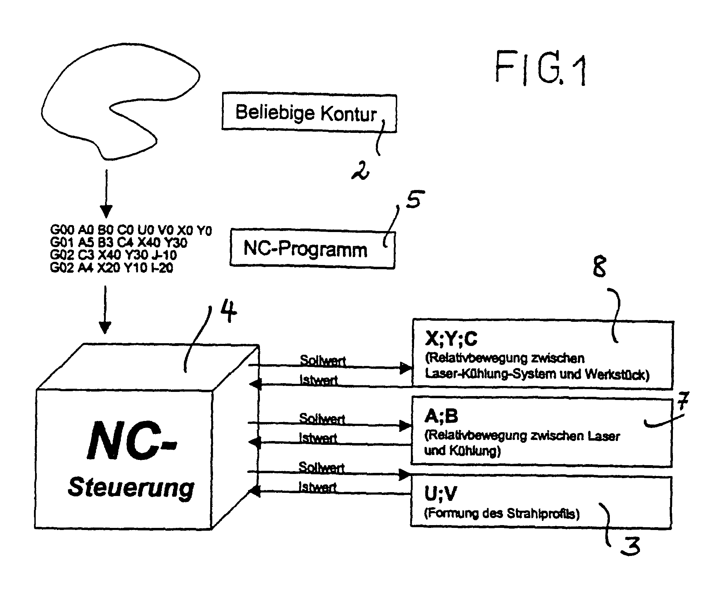

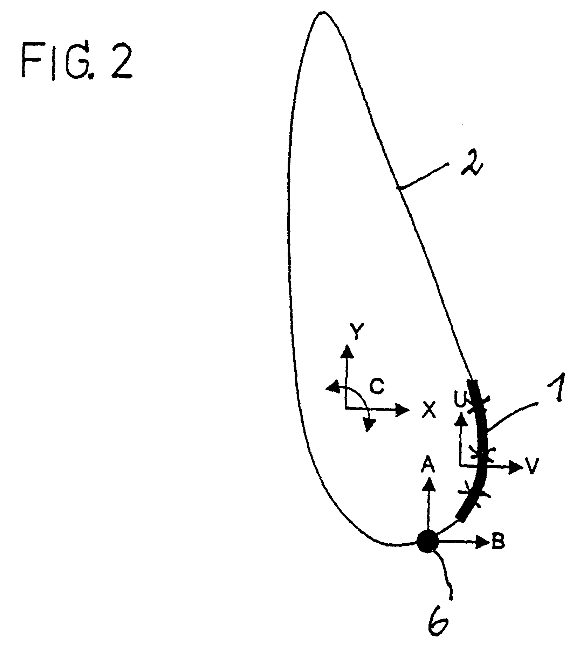

In den Figuren 1 und 2 ist das erfindungsgemäße Prinzip der Durchtrennung eines flachen Werkstückes aus sprödbrüchigem Material, insbesondere von Flachglas, mittels des Laserstrahl-Trennverfahrens dargestellt, wobei die Fig. 1 den prinzipiellen Aufbau der Steuerung der Bewegungsabläufe entlang einer vorgegebenen Kontur und die Fig. 2 die Brennfleckgeometrie des Laserstrahles mit dem nachlaufenden Kühlfleck und die Zuordnung der Bewegungsachsen zu der Kontursteuerung nach Fig. 1 zeigt.

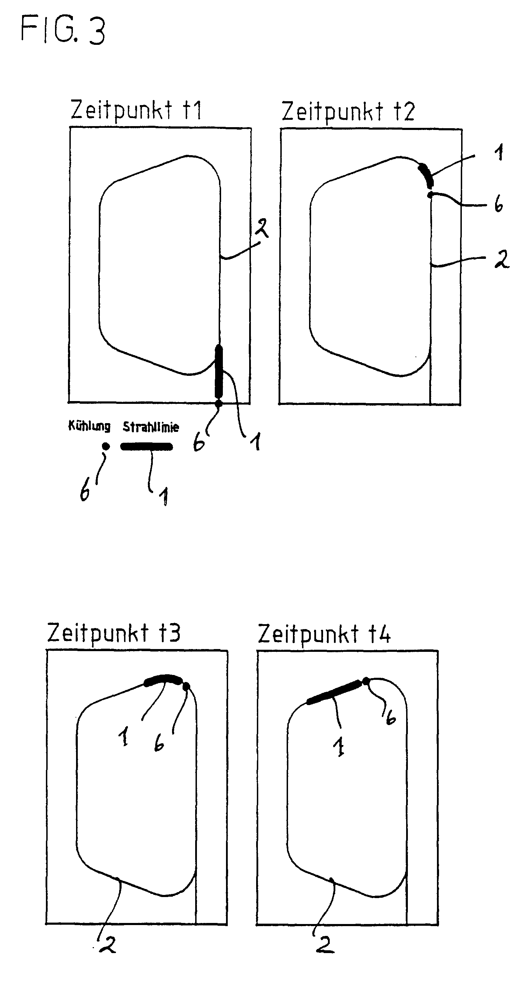

Das erfindungsgemäße Trennprinzip beruht auf einem linienförmigen Brennfleck 1, der entsprechend der jeweiligen Kontur der Trennlinie 2 gekrümmt wird. Ist die Trennlinie 2 linear, kann die Brennlinie 1 relativ lang sein, wie in der Fig. 3 dargestellt ist. Je kleiner der Krümmungsradius der Kontur der Trennlinie 2 ist, umso kürzer ist die Linie 1, damit der notwendige Energieeintrag auf der Trennlinie gewährleistet ist. Die Linienlänge variiert hierbei zwischen 10 mm und 100 mm. Parallel zur Änderung der Linienlänge wird zweckmäßig die Laserleistung bei kurzen Linien heruntergeregelt und bei langen Linien heraufgeregelt.

Zur Erzeugung des linienförmigen Brennfleckes 1 wird vorzugsweise ein bekannter Laserstrahl-Scanner mit Schwingspiegeln und einem sie bewegenden Oszillatormotor, vorzugsweise in Form eines Galvanometerspiegels, z.B. entsprechend Fig. 5 der eingangs zitierten EP 0 872 303 A 2, verwendet. Prinzipiell könnte auch nur ein Spiegel, der schwenkbar gelagert ist, vorgesehen sein.

Auch kann ein Scannen mittels Drehspiegel entsprechend Fig. 6 der vorgenannten EP-Schrift (Polygonrad) Anwendung finden.

Beim typischen Scannen mit Schwingspiegeln weisen diese eine Schwingfrequenz von 400 Hz und höher auf, wobei die Schwingweite des einen ersten Schwingspiegels die Linienlänge und des anderen, zweiten Spiegels die Abweichung der Linie von einer Geraden bestimmt. Die Steuerung des Scanners erfolgt durch eine Profilsteuerung 3 in Fig. 1. Diese Profilsteuerung empfängt von einer NC-Steuerung u.a. den Sollwert für die an der jeweiligen Stelle der Trennlinie 2 erforderliche Länge des Brennflecks 1. Die Profilsteuerung steuert dabei den Oszillatormotor des ersten Schwingspiegels so an, daß dieser für die geforderte Länge des Profils entsprechende Schwingungsamplitude ausführt. Die Profilsteuerung 3 erzeugt hierbei eine analoge Spannungsschwingung als Sollwert, der direkt von dem Oszillatormotor zu einer oszillierenden Bewegung umgesetzt wird. Der Sollwert, welcher von der NC-Steuerung 4 an die Profilsteuerung 3 gegeben wird, wird entweder in Form eines analogen konstanten Spannungssignals, z.B. 0 - 10 V, übergeben, wobei die Länge proportional zur Höhe der Spannung ist, oder in Form eines digitalen Wertes mit einer Auflösung von mindestens 8 bit. Die dargestellte Istwertrückmeldung des Meßsystems des Oszillatormotors im Rahmen einer Regelung kann entfallen, wenn für den Oszillatormotor eine Kalibrierkurve in der Profilsteuerung 3 oder der NC-Steuerung 4 abgelegt ist. Zusätzlich zur Vorgabe der Schwingweite erhält der Scanner während jeder Schwingung der Spiegel von der NC-Steuerung 4 zu vorgegebenen Zeitpunkten, die in der Fig. 2 mit einem Kreuz gekennzeichnet sind, Daten für die Achsen U, V, die den zweiten Schwingspiegel so steuern, daß während der jeweiligen Schwingung des ersten Spiegels die Brennlinie 1 entsprechend der Kontur der Trennlinie 2 gekrümmt wird. Je mehr Daten pro Schwingung bereitgestellt werden können, umso besser kann die Krümmung angenähert werden.

Damit die Brennlinie 1 auf der gewünschten Trennlinie 2 liegt, steuert die NC-Steuerung 4 die NC-Achsen 8 (X, Y und C) und die Profillänge bzw. deren Krümmung über die Sollwertvorgabe der Achsen U und V an die Profilsteuerung 3 nach einem bekannten NC-Programm 5. Mit den Informationen über die Profillänge, deren Krümmung durch die Werte der Achsen U und V, die Position bzw. die Geschwindigkeiten der Achsen X, Y und C und der durch ein NC-Programm 5 beschriebenen Form der Trennlinie 2, ist die NC-Steuerung in der Lage, die Brennlinie 1 so zu führen, daß sie mit einer maximalen Abweichung von typischerweise weniger als 0,2 mm die Trennlinie verfolgt. Die Verfolgung der Trennlinie ist umso genauer, je schneller die NC-Steuerung in der Lage ist, neue Sollwerte für die Achsen 8 und die Profilsteuerung 3 zu generieren und je schneller diese von den Achsen 8 und den Oszillatormotoren des Schwingspiegels umgesetzt werden können.

Die Fig. 3 zeigt ein Beispiel für einen Freiformschnitt mit einer trapezförmigen Kontur der Trennlinie 2 mit stark abgerundeten Ecken.

Im Startzeitpunkt t₁ ist der Brennfleck 1 linear, da ein lineares Teilstück zu trennen ist. Zum Zeitpunkt t₂ erweicht der Brennfleck ein stark gekrümmtes Teilstück der Trennlinie. Er wird dann durch die Daten der Bahnsteuerung entsprechend der Trennlinie gekrümmt und auch verkürzt.

Zum Zeitpunkt t₃ befindet sich der Brennfleck 1 auf einem weniger gekrümmten Abschnitt der Trennlinie 2. Er ist dadurch entsprechend weniger gekrümmt und auch etwas länger als im Zeitpunkt t₂. Zum Zeitpunkt t₄ befindet sich der Brennfleck 1 wieder in einem linearen Abschnitt und hat die Abmessungen wie zum Zeitpunkt t₁.

Die Breite der Brennlinie 1 wird durch den Durchmesser des fokussierten Laserstrahles auf der Werkstückoberfläche vorgegeben. Der Durchmesser auf der Werkstückoberfläche liegt typischerweise zwischen 0,3 mm und mehreren Millimetern. Zur Fokussierung des Laserstrahles werden optische Elemente verwendet. Bei der Auswahl der optischen Elemente und des Lasers ist es Ziel, die Intensitätsverteilung entlang der Linie gleichmäßig ohne lokale Intensitätspeaks zu gestalten. Auf diese Weise kann die meiste Laserenergie in das Werkstück eingekoppelt werden, ohne daß die Glaserweichungstemperatur überschritten wird. Zu diesem Zweck können langbrennweitige fokussierende Elemente ab ca. 300 mm, Top-Hat-Linsen, Axikons oder Laser mit einem Ringmode oder Multimode eingesetzt werden. Die Breite der Linie ist dabei abhängig von der benötigen Laserleistung, Kühlung, Materialart, Materialdicke und Vorschubgeschwindigkeit.

Mit der erfindungsgemäßen Methode kann dabei ein Linienprofil beliebiger Länge und Form bereitgestellt werden.

Zur Erhöhung der thermomechanischen Spannung wird in bekannter Weise eine Kühlung in Form eines Kühlflecks 6 in einem definierten Abstand auf der durchzutrennenden Kontur 2 hinter dem Laserprofil, d.h. der Brennlinie 1, nachgeführt. Dieser Kühlfleck 6 wird beispielsweise durch Aufblasen von kalter Luft oder Gas/Flüssigkeitsgemische durch eine Düse erzeugt.

Durch die hohe Temperatur im Werkstück, die durch den Laserstrahl erzeugt wird, wird eine hohe thermomechanische Spannung entlang der zu trennenden Kontur im Werkstück erzeugt. Bei nachfolgender Kühlung und vorheriger Schwächung des Glases am Startpunkt des Schnittes/Risses, reißt das Glas entlang der durch die Kühldüse und die "Strahllinie" beschriebene Kontur.

Wegen der gezielten Erwärmung des Werkstücks entlang der durchzutrennenden Kontur und der an der Kontur in einem definierenden Abstand zwischen ca. 2 mm und 15 mm nachgeführten Kühlung, folgt der Schnitt sehr präzise jeder beliebigen Freiform. Auf diese Weise können beispielsweise bei Dünnglas (ca. 50 µm), aber auch bei dickem Glas (mehrere Millimeter) jede beliebige Geometrie durchschnitten oder bis zu einer Tiefe von mehreren Zehntel Millimetern geritzt werden.

Der Vorteil des Schneidens besteht darin, daß kein anschließendes Brechen notwendig ist und somit ein Fertigungsschritt eingespart wird. Der Vorteil des Ritzens besteht darin, daß mit wesentlich höheren Geschwindigkeiten (bis zu 1000 mm/s) der Werkstoff auch nach dem Brechen nahezu splitterfrei getrennt wurde und aufgrund von fehlenden Mikrorissen und Ausmuschelungen eine deutlich höhere Kantenfestigkeit erreicht wird.

Um dies zu erreichen, muß auch die Kühlung, d.h. der Kühlfleck 6, sehr präzise in seiner Position relativ zu der Brennlinie 1 eingestellt werden.

Die in Fig. 1 dargestellten Achsen 7 (A und B), welche für die Nachführung der Kühldüse auf der Trennlinie 2 verantwortlich sind, sind daher ebenfalls mit der NC-Steuerung 4 verbunden. Die Achsen A und B interpolieren ebenfalls mit den Achsen X, Y, C und der vom Oszillatormotor des ersten Schwingspiegels vorgegebenen Achse.

Die Aufgabe der Achsen A und B ist es, den Abstand des Kühlflecks 6 zum Anfangspunkt der Brennlinie 1 konstant zu halten. Die Profilsteuerung 3 kann hierbei so gestaltet werden, daß der niedrigste Spannungswert der Schwingspannung für den Oszillator des Schwingspiegels immer konstant bleibt. Auf diese Weise ist dieser Anfangspunkt ortsfest. Die Achsen 7 A und B müssen somit nur kurze Hübe ausführen.

Zur Vereinfachung des Aufbaues der Anlage kann in einer Variante der Umsetzung der Achsen auf die Achse A verzichtet werden. Auf diese Weise ergibt sich beim Nachfahren der Kontur ein nicht konstanter Abstand der Kühlung zur Anfangsposition der Brennlinie. Dieser Umstand kann mit Verringerung der Schnittgeschwindigkeit durch die Anpassung der Prozeßparameter kompensiert werden.

Unter Achsen im Sinne der Erfindung sollen nicht nur die geometrischen Achsen, sondern auch die zugehörigen, die Achsen vorgebenden Bewegungselemente, wie Aktuatoren und Stellglieder, verstanden werden.

## Patentansprüche

1. Verfahren zum Durchtrennen von flachen Werkstücken aus sprödbrüchigem Material, bei dem ein Laserstrahl mit einem linienförmigen Strahlprofil mit nachlaufendem Kühlfleck entlang einer Trennlinie mit vorgegebener Kontur bewegt wird, **dadurch gekennzeichnet, daß** auf dem Werkstück ein linienförmiger Brennfleck (1) durch Scannen des Laserstrahles erzeugt wird, und während jeder Scanbewegung Bahndaten der Trennlinie (2) bereitgestellt werden, derart, daß der linienförmige Brennfleck (1) eine Krümmung entsprechend der Krümmung der Kontur der Trennlinie (2) erfährt, und seine Länge ebenfalls abhängig von der Krümmung der Kontur der Trennlinie durch Einstellen der Scannamplitude eingestellt wird.

2. Verfahren nach Anspruch 1, **dadurch gekennzeichnet, daß** die Laserleistung abhängig von der Länge des linienförmigen Brennfleckes eingestellt wird.

3. Verfahren nach Anspruch 1 oder 2, **dadurch gekennzeichnet, daß** der Kühlfleck (6) so dem linienförmigen Brennfleck (1) nachgeführt wird, daß sein Abstand zum Anfangspunkt des Brennfleckes (1) konstant ist.

4. Vorrichtung zum Durchführen des Verfahrens nach einem der Ansprüche 1 bis 3, **dadurch gekennzeichnet, daß** eine optische Anordnung mit einem Scanner zur Erzeugung eines linienförmigen Brennfleckes (1) vorgesehen ist, die über eine die Kontur des Brennfleckes durch Achsen U und V vorgebende Profilsteuerung (3) und Lageachsen X, Y, C des Brennfleckes in Bezug auf das Werkstück vorgebende Stellglieder (8) derart mit einer numerischen Bahnsteuerung (4) gekoppelt sind, daß während jeder Scanbewegung Bahndaten der Trennlinie (2) der Profilsteuerung (3) und den Stellgliedern (8) zuführbar sind, derart, daß der linienförmige Brennfleck (1) eine Krümmung entsprechend der Krümmung der Kontur der Trennlinie (2) erfährt sowie auf dieser verfahrbar ist und seine Länge ebenfalls abhängig von der Kontur der Trennlinie (2) einstellbar ist.

5. Vorrichtung nach Anspruch 4, **dadurch gekennzeichnet, daß** weitere mit der Bahnsteuerung (4) gekoppelte Achsens (7) zum Positionieren des Kühlfleckes (6) in Bezug auf den linienförmigen Brennfleck (1) und das Werkstück vorgesehen sind.

6. Vorrichtung nach Anspruch 4 oder 5, **dadurch gekennzeichnet, daß** die optische Anordnung einen Scanner mit zwei senkrecht zueinander oszillierenden Schwingspiegeln aufweist.

## Claims

1. Method for cutting flat workpieces made from brittle material, in which a laser beam having a linear beam profile is moved, followed by a cooling spot, along a dividing line with a specified contour, **characterized in that** a linear focal spot (1) is produced on the workpiece by scanning of the laser beam, and during each scanning movement trajectory data about the dividing line (2) are provided, in such a manner that the linear focal spot (1) experiences a curvature corresponding to the curvature of the contour of the dividing line (2), and its length is likewise adjusted as a function of the curvature of the contour of the dividing line by adjusting the scanning amplitude.

2. Method according to Claim 1, **characterized in that** the laser power is adjusted as a function of the length of the linear focal spot.

3. Method according to Claim 1 or 2, **characterized in that** the cooling spot (6) tracks the linear focal spot (1) in such a way that it is at a constant distance from the starting point of the focal spot (1).

4. Device for carrying out the method according to one of Claims 1 to 3, **characterized in that** an optical arrangement having a scanner for generating a linear focal spot (1) is provided, which is coupled to a digital trajectory control unit (4), via a profile control unit (3), which specifies the contour of the focal spot by means of axes U and V, and actuators (8), which specify positional axes X, Y, C of the focal spot with respect to the workpiece, in such a manner that during each scanning movement trajectory data for the dividing line (2) can be fed to the profile control unit (3) and the actuators (8), in such a manner that the linear focal spot (1) experiences a curvature corresponding to the curvature of the contour of the dividing line (2) and can be displaced along this curvature, and its length can likewise be adjusted as a function of the contour of the dividing line (2).

5. Device according to Claim 4, **characterized in that** there are further axes (7), which are coupled to the trajectory control unit (4), for positioning the cooling spot (6) with respect to the linear focal spot (1) and the workpiece.

6. Device according to Claim 4 or 5, **characterized in that** the optical arrangement has a scanner with two oscillating mirrors which oscillate at right angles to one another.

## Revendications

1. Procédé de séparation de pièces plates constituées d'un matériau fragile cassant, dans lequel un faisceau laser de profil linéaire suivi d'un spot de refroidissement suiveur est déplacé le long d'une ligne de séparation de contour prédéterminé, **caractérisé en ce qu'**un foyer linéaire (1) est produit sur la pièce par balayage du faisceau laser et, au cours de chaque mouvement de balayage, des données continues relatives à la ligne de séparation (2) sont fournies de sorte que le foyer linéaire (1) suive une courbure correspondant à la courbure du contour de la ligne de séparation (2) et que sa longueur soit également réglée en fonction de la courbure du contour de la ligne de séparation par réglage de l'amplitude de balayage.

2. Procédé selon la revendication 1, **caractérisé en ce que** la puissance du laser est réglée en fonction de la longueur du foyer linéaire.

3. Procédé selon la revendication 1 ou 2, **caractérisé en ce que** le spot de refroidissement (6) suit le foyer linéaire (1) de sorte que sa distance au point de départ du foyer (1) soit constante.

4. Dispositif pour réaliser le procédé selon l'une quelconque des revendications 1 à 3, **caractérisé en ce qu'**il est prévu un aménagement optique avec un scanneur pour produire un foyer linéaire (1), ledit aménagement étant, via une commande de profil (3) prédéfinissant le contour du foyer par des axes U et V et des organes de réglage (8) prédéfinissant des axes de position X, Y, C du foyer par rapport à la pièce, couplé à une commande numérique continue de sorte qu'au cours de chaque mouvement: de balayage, des données continues de la ligne de séparation (2) puissent être acheminées à la commande de profil (3) et aux organes de réglage (8) afin que le foyer linéaire (1) suive une courbure correspondant à la courbure du contour de la ligne de séparation (2) et puisse être également déplacé sur celui-ci et que sa longueur soit également réglable en fonction du contour de la ligne de séparation (2).

5. Dispositif selon la revendication 4, **caractérisé en ce qu'**il est prévu d'autres axes (7) couplés à la commande continue (4) pour positionner le spot de refroidissement (6) par rapport au foyer linéaire (1) et à la pièce.

6. Dispositif selon la revendication 4 ou 5, **caractérisé en ce que** l'aménagement optique présente un scanneur ayant deux miroirs oscillants qui peuvent osciller perpendiculairement l'un par rapport à l'autre.
